# EUROPEAN PATENT APPLICATION

(11) **EP 2 105 620 A1**
(43) Date of publication of application: **30.09.2009**
(21) Application number: 09250044.6
(22) Date of filing: 08.01.2009
(51) Int. Cl.: F16B 21/02, A01K 97/12

(54) **A connection device**

(30) Priority: 25.03.2008 GB 0805395
(71) Applicant: Fox International Group Limited, Hainault, Essex IG6 3UT (GB)
(72) Inventor: Taylor, Adam, Loughton, Essex IG10 2QH (GB)
(74) Representative: Crouch, David John

(57) **Abstract**

A connection device comprising two parts (14 and 15) which are connectable to one another. One of the two parts has a spigot (30) with a spigot axis. The other part has a hollow (44) into which the spigot (30) is inserted in the direction of the axis when the two parts are connected together. The two parts (14 and 15) are then rotatable relative to one another about the spigot axis. They have interengaging portions (46, 32; 48, 34) which are disengaged when the two parts (14 and 15) are in a first relative angular position, to enable the spigot (30) to be readily removed from or reinserted into the hollow (44) thereby to separate or reconnect the two parts (14 and 15), and which interengaging portions (46, 32; 48, 34) are engaged when the two parts (14 and 15) are in a second relative angular portion to inhibit such removal. At least one (15) of the two parts (14 and 15) is elongate. The spigot axis extends transversely of the said at least one (15) of the said two parts. The said interengaging portions (14 and 15) are spaced from the spigot (30) in a direction along the said at least one (15) of the said two parts (14 and 15) to provide resistance of the connection to a torque which tends to bend the parts (14 and 15) about a bending axis which is transverse of the spigot axis.

## Description

The present invention relates to a connection device comprising two parts which are connectable to one another, one of the two parts having a spigot with a spigot axis and the other having a hollow into which the spigot is inserted in the direction of the axis when the two parts are connected together, whereupon the two parts are rotatable relative to one another about the spigot axis, the two parts having interengaging portions which are disengaged when the two parts are in a first relative angular position, to enable the spigot to be readily removed from or reinserted into the hollow thereby to separate or reconnect the two parts, and which interengaging portions are engaged when the two parts are in a second relative angular portion to inhibit such removal.

Such a construction is embodied for example in a bayonet connection. A disadvantage of such a connection is that it does not have adequate resistance against movement in the event of a bending torque being applied in such a manner that it tends to break the connection.

The present invention seeks to obviate this disadvantage.

Accordingly, the present invention is directed to a connection device having the construction set out in the opening paragraph of the present specification, in which at least one of the two parts is elongate, the spigot axis extends transversely of the said at least one of the said two parts, and the said interengaging portions are spaced from the spigot in a direction along the said at least one of the said two parts to provide resistance of the connection to a torque which tends to bend the parts about a bending axis which is transverse of the spigot axis.

Preferably, the hollow is a through-hole to give a high resistance to the torque that can be resisted by the spigot itself, but it could alternatively be a recess.

The said interengaging portions may be provided on one side of the spigot, and also on the diametrically opposite side thereof, also with a view to giving a high resistance to such a torque.

The interengaging portions may comprise respective shoulders on the said two parts. Such shoulders provide abutments to provide unyielding resistance to such a torque.

A snap-action device may be provided to releasably hold the said two parts in the said second relative angular position. This reduces the likelihood that the said two parts will be accidentally knocked out of alignment.

The snap-action device may comprise a resiliently loaded spigot on one of the said two parts which is urged by a resilient component into a hollow in the other of the said two parts when the two parts are in the said second relative angular position.

The said one of the said two parts may be the said at least one of the said two parts.

Advantageously, the first mentioned spigot is on the said at least one of the said two parts, so that the hollow for the first mentioned spigot is on the other part from the one that carries the spring loaded spigot, enabling a more compact construction than one in which both the hollow for the first mentioned spigot and the spring loaded spigot are on the same part.

One of the said two parts may comprise a ring which can be held at the upper end of a bank stick used in angling.

The other of the said two parts may comprise a mounting support of a pivotal arm fish bite indicator.

An example of a fish bite indicator embodying the present invention is illustrated in the accompanying drawings, in which:
- Figure 1: is a side view of the bite indicator;
- Figures 2a to 2c: show respectively an axial sectional view, a front view and a view from the other side of the bite indicator shown in Figure 1; and
- Figures 3a to 3d: show respective perspective views of the bite indicator shown in Figure 1 from the rear and to one side thereof, Figure 3a showing the indicator with connecting parts thereof in a locked condition ready for use, and Figures 3b to 3d showing the indicator with connecting parts thereof in successive relative positions towards a release condition.

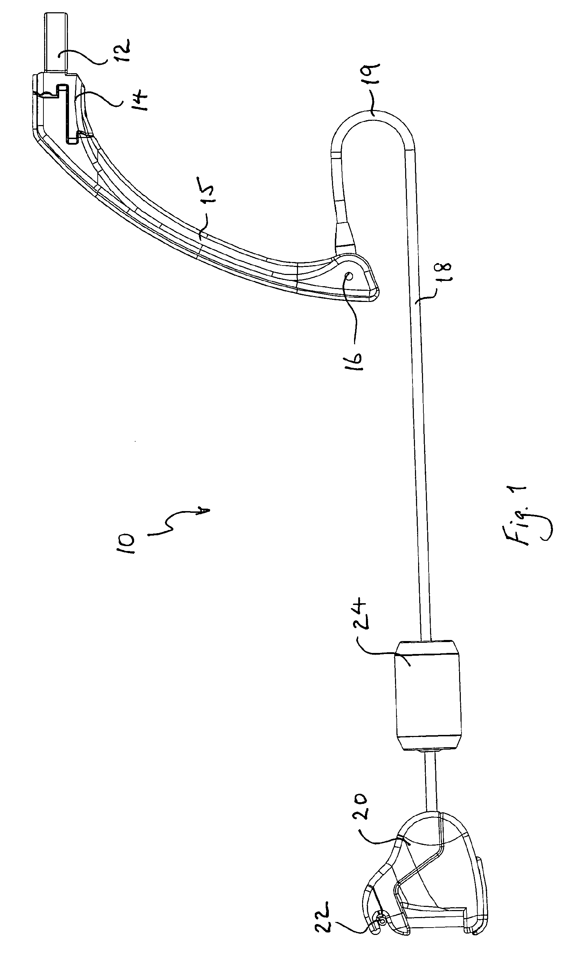

The bite indicator 10 shown in Figure 1 comprises a mounting ring 12 having a connection portion 14 thus constituting a first connection part, and an elongate mounting support 15 that extends in an intended slanting downward direction from the end of the support 15 which is connected to the connection portion 14, with the ring 12 held in a generally horizontal position. The mounting support 15 therefor constitutes a second connecting part. The end of the mounting support 15 that is further from the ring 12 is provided with a pivot 16 pivotally connected to which is one end of a pivotal wire arm 18. The latter extends firstly in a direction closer to the ring 12 and then through a 180° U-bend 19 in the opposite direction to a line engaging head 20 which has a releasable line attachment part 22. A weight 24 surrounds and is slidable along the wire arm 18 against the action of a friction grip therewith, so that the weight will not slide along the arm 18 under its own weight.

When the indicator 10 is in use, a fishing line of a rod (not shown) is releasably held in the line attachment part 22. The ring 12 is clamped in a horizontal position at the top of a bank stick (not shown). If a fish takes the bait and swallows a hook (not shown) at the end of the line, and then swims towards the indicator, the line will be slackened and the indicator head 20 will drop. If the fish swims away from the indicator, the tension in the line will increase and the head 20 will rise. Either way, the user is given an indication of a fish bite.

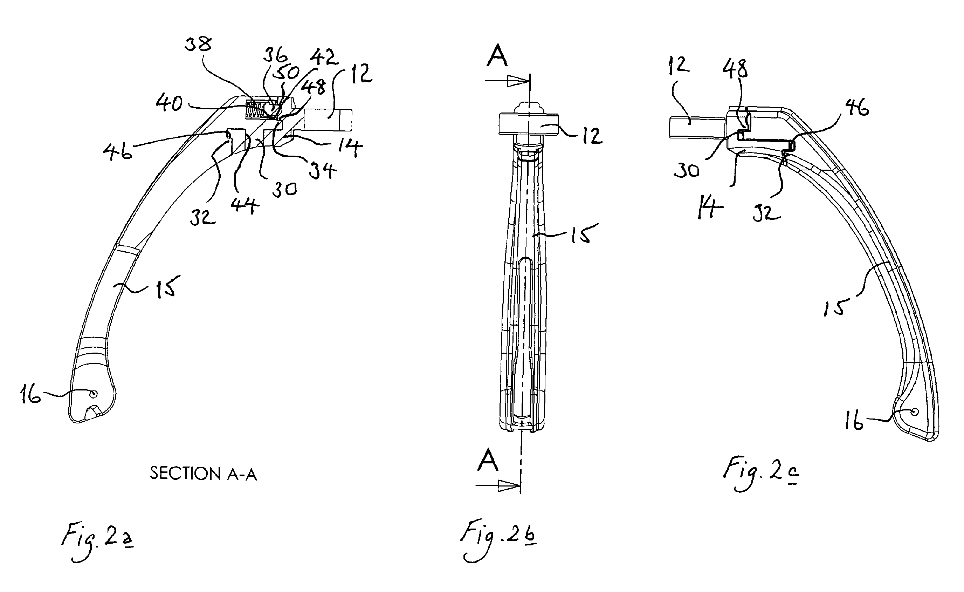

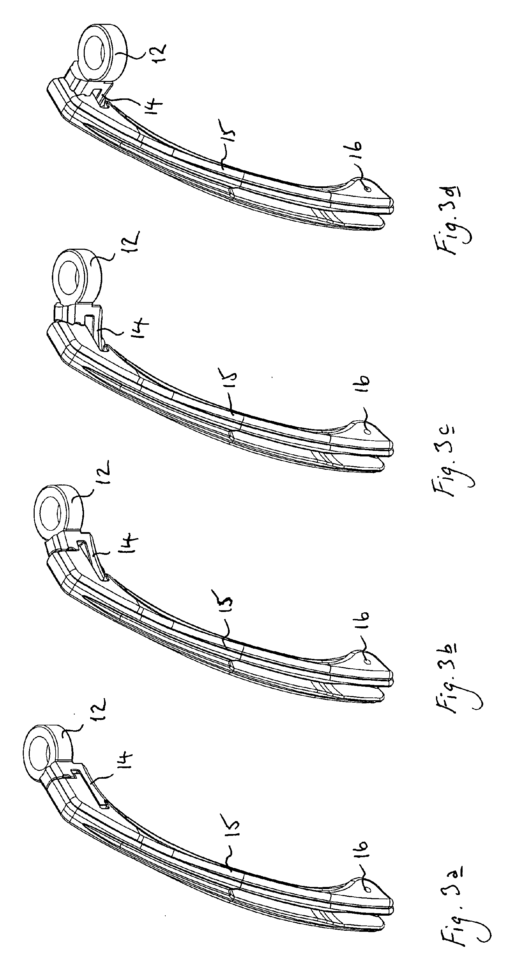

The connection portion 14 and the mounting support 15 are connected together by a device which is shown more clearly in Figures 2a to 3d.

Thus, the mounting support 15 has, at its upper end a downwardly extending spigot 30 of circular cross-section and of cylindrical shape. It has a first shoulder portion 32 spaced from and on that side of the spigot 30 from which the main part of the mounting support 15 extends, and a second shoulder portion 34 on the opposite side of and spaced from the spigot 30.

A further spigot 36 of the support 15 extends transversely of the spigot 30, in a direction away from the main part of the mounting support 15. The further spigot 36 is spring loaded by means of a compression spring 38 urging it in an outward direction. The spigot is held against being ejected from the support 15 by interengaging shoulder portions 40 and 42 of the spigot and the support 15 respectively.

The connection portion 14 of the ring 12 has a hollow in the form of a cylindrical through-hole 44 into which fits the spigot 30. It is formed with a shoulder portion 46 which interengages the shoulder portion 32 of the support 15, such as to resist downward movement of the shoulder portion 46 relative to the support 15. It is also formed with a shoulder portion 48 which interengages the shoulder portion 34 to resist downward movement of the shoulder portion 48 relative to the support 15. Respective opposing abutting surfaces of the connection portion 14 and the support 15 on opposide sides of the spigot 30 resist relative upward movement of the connection portion 14.

The connection portion 14 just above the shoulder portions 34 and 48 is formed with a recess 50 into which engages the spigot 36, to provide a resistance to any pivoting movement between the ring 12 and the support 15 about the spigot axis of the spigot 30, but not such a strong resistance that it cannot be readily overcome manually.

For dismantling the equipment, a sufficient torque can be applied manually to force the spigot 36 out of engagement with the recess 50, whereupon the support 15 and with it the whole of the bite indicator 10 can be pivoted relative to the ring 12 about the spigot 30. Once the shoulder portions 46 and 32, and the shoulder portions 48 and 34 are out of engagement with one another, and the support 15 has been rotated about the spigot 30 through an angle of 90° or thereabouts (in the illustrated sense or in the sense opposite thereto), the support 15 can be lowered to disengage the spigot 30 from the through-hole 44 and separate the support 15 from the ring 12.

When re-assembling the equipment, the forgoing procedure can be followed in reverse.

Numerous modifications and alterations to the illustrated bite indicator may occur to the reader without taking the resulting construction outside the scope of the present invention. To give one example only, the through-hole 44 could instead be a blind hole or recess.

## Claims

1. A connection device comprising two parts (14 and 15) which are connectable to one another, one of the two parts having a spigot (30) with a spigot axis and the other having a hollow (44) into which the spigot (30) is inserted in the direction of the axis when the two parts are connected together, whereupon the two parts (14 and 15) are rotatable relative to one another about the spigot axis, the two parts (14 and 15) having interengaging portions (46, 32; 48, 34) which are disengaged when the two parts (14 and 15) are in a first relative angular position, to enable the spigot (30) to be readily removed from or reinserted into the hollow (44) thereby to separate or reconnect the two parts (14 and 15), and which interengaging portions (46, 32; 48, 34) are engaged when the two parts (14 and 15) are in a second relative angular portion to inhibit such removal, **characterised in that** at least one (15) of the two parts (14 and 15) is elongate, the spigot axis extends transversely of the said at least one (15) of the said two parts, and the said interengaging portions (14 and 15) are spaced from the spigot (30) in a direction along the said at least one (15) of the said two parts (14 and 15) to provide resistance of the connection to a torque which tends to bend the parts (14 and 15) about a bending axis which is transverse of the spigot axis.

2. A connection device according to claim 1,
**characterised in that** the hollow (44) comprises a through-hole.

3. A connection device according to claim 1, **characterised in that** the hollow (44) comprises a recess.

4. A connection device according to any preceding claim, **characterised in that** the said interengaging portions (46, 32) are provided on one side of the spigot (30), and also (48, 34) on the diametrically opposite side thereof.

5. A connection device according to any preceding claim, **characterised in that** the interengaging portions comprise respective shoulders on the said two parts (14 and 15).

6. A connection device according to any preceding claim, **characterised in that** a snap-action device (36, 38, 50) is provided to releasably hold the said two parts (14 and 15) in the said second relative angular position.

7. A connection device according to claim 6, **characterised in that** the snap-action device (36, 38, 50) comprises a resiliently loaded spigot (36) on one (15) of the said two parts (14 and 15) which is urged by a resilient component (38) into a hollow (50) in the other (14) of the said two parts (14 and 15) when the two parts are in the said second relative angular position.

8. A connection device according to claim 7, **characterised in that** the said one (15) of the said two parts is the said at least one (15) of the said two parts (14 and 15).

9. A connection device according to claim 7 or claim 8, **characterised in that** the spigot (30) mentioned in claim 1 is on the said at least one (15) of the said two parts (14 and 15), so that the hollow (44) for the spigot (30) mentioned in claim 1 is on the other part (14) from the one (15) that carries the resiliently loaded spigot (36).

10. A connection device according to any preceding claim, **characterised in that** one (14) of the said two parts (14 and 15) comprises a ring (12) which can be held at the upper end of a bank stick used in angling.

11. A connection device according to claim 10, **characterised in that** the other (15) of the said two parts (14 and 15) comprises a mounting support (15) of a pivotal arm fish bite indicator (18 to 24).
